# EUROPEAN PATENT SPECIFICATION

(11) **EP 1 860 084 B1**
(45) Date of publication and mention of the grant of the patent: **01.08.2012**
(21) Application number: 07108723.3
(22) Date of filing: 23.05.2007
(51) Int. Cl.: C04B 41/88, B22F 3/11, B22F 3/22, B22F 5/04, B22F 5/00, C22C 1/08, C04B 38/00

(54) **Method of making metallic composite foam components**
Verfahren zur Herstellung von Schaumkomponenten aus metallischen Zusammensetzungen
Procédé pour la fabrication de composants métalliques composites en mousse

(30) Priority: 23.05.2006 US 419884
(43) Date of publication of application: 28.11.2007
(73) Proprietor: GENERAL ELECTRIC COMPANY, Schenectady, NY 12345 (US)
(72) Inventor: KELLY, Thomas J., Cincinnati, OH 45241 (US); PARKS, Melissa J., Loveland, OH 45140 (US)
(74) Representative: Illingworth-Law, William Illingworth

(56) References cited:
- WO-A-2004/043875
- DE-A1- 10 013 378
- US-B1- 6 435 824
- US-B1- 6 544 003
- US-B1- 6 755 619

## Description

### BACKGROUND OF THE INVENTION

This invention relates generally to metallic components and more particularly to composite components which include a foam as part of their structure.

Certain foams, including particularly foams with ceramic and/or metallic cell walls, have promise as structural materials. In particular, they may be useful for light weight, high-strength, high-temperature capable components for gas turbine engines. It has been proposed to create composite materials from such foams by filling the intracellular spaces of the foam with a metal alloy, for example by introducing molten alloy into the foam and then allowing it to solidify.

US-B 1-6 755 619 discloses a blade tip seal to be joined to the tip end of an airfoil section. The blade tip seal comprises an open-cell solid ceramic foam made of ceramic cell walls having intracellular volume therebetween. At least some of the intracellular volume contains a nickel-base alloy and at least some of the intracellular volume is porous (i.e. contains no solid phase). Typically, the blade tip seal is shaped to attach to and cover the entire end of the airfoil section.

US-B1-6 544 003 discloses a ceramic foam preform material comprising two interpenetrating, continuous regions. An intracellular volume may be left empty/porous.

US-B 1-6 435 824 discloses producing a structure having a porous intracellular volume having the important advantage that the porous ceramic structure serves as a thermal barrier. The structure may be coarse machined and/or fine machined to adjust its size and dimensions.

WO 2004/043875 discloses a ceramic-metal or metal-ceramic composite material produced by pressure-less infiltration.

DE 100 13 378 discloses a three dimensional continuous ceramic network and a three dimensional continuous pore network. The entire voids content is between 30% and 80%.

However, the high temperature processing required for many metal alloys may cause nonuniform heating and thermal stresses in foam structures. This can result in immediate thermal fatigue failure of the foam, rendering it unusable for the intended purpose.

Accordingly, there is a need for a method of manufacturing a composite metallic component using a ceramic or metallic foam core, while protecting the structural integrity of the foam.

### BRIEF SUMMARY OF THE INVENTION

The above-mentioned need is met by the present invention, which according to one aspect provides a method of producing a metallic composite component, including: providing a core defining at least a portion of the exterior contours of the component and comprising a foam material having ceramic or metallic cell walls with intracellular volume therebetween; disposing the core in a mold having a cavity defining the exterior contour of the component; providing a mixture of a metallic powder and a binder; melting the binder and injecting the mixture into the mold so as to penetrate the intracellular volume; removing a portion of the binder from the preform; heating the preform to remove the remainder of the binder and to sinter the metal powder together to form the finished component and performing a hot isostatic pressing treatment on the component after the heating step.

### BRIEF DESCRIPTION OF THE DRAWINGS

The invention may be best understood by reference to the following description taken in conjunction with the accompanying drawing figures of embodiments provided by way of example in which:
Figure 1 is a perspective view of an exemplary metallic component;
Figure 2 is a partial cross-section taken along lines 2-2 of Figure 1 illustrating the structure of the component of Figure 1 before a metal injection molding process;
Figure 3 is a view illustrating the structure of the component of Figure 1 after a first step in a manufacturing process thereof;
Figure 4 is a view illustrating the structure of the component of Figure 1 after a second step; and
Figure 5 is a block diagram of a manufacturing process carried out in accordance with the present invention.

### DETAILED DESCRIPTION OF THE INVENTION

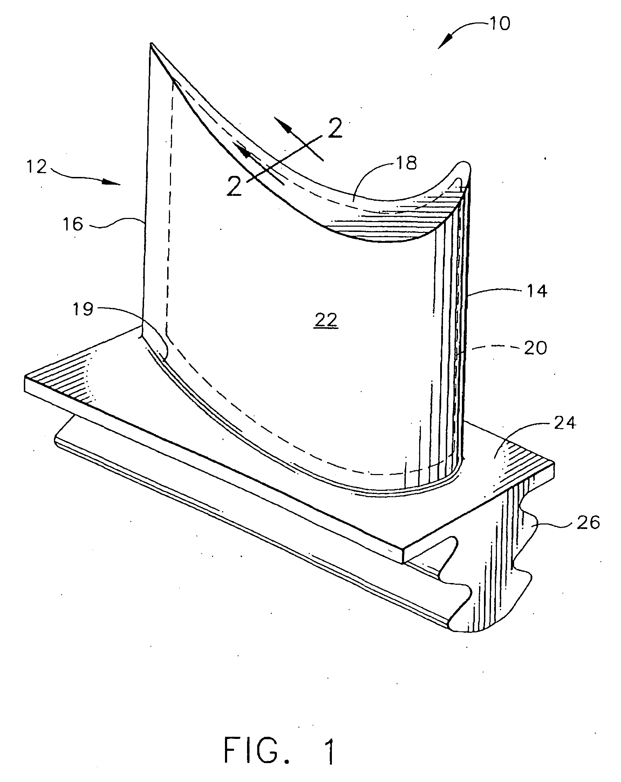

Referring to the drawings wherein identical reference numerals denote the same elements throughout the various views, Figure 1 depicts an exemplary turbine blade 10 for a gas turbine engine. The present invention is equally applicable to the construction of other types of metallic components, non-limiting examples of which include rotating compressor blades, stationary turbine vanes, turbine shrouds, and the like. The turbine blade 10 comprises an airfoil 12 having a leading edge 14, a trailing edge 16, a tip 18, a root 19, and opposed sides 20 and 22. An arcuate inner platform 24 is attached to the root 19 of the airfoil 12. A dovetail 26 extends downward for mounting the blade 10 in a rotor slot.

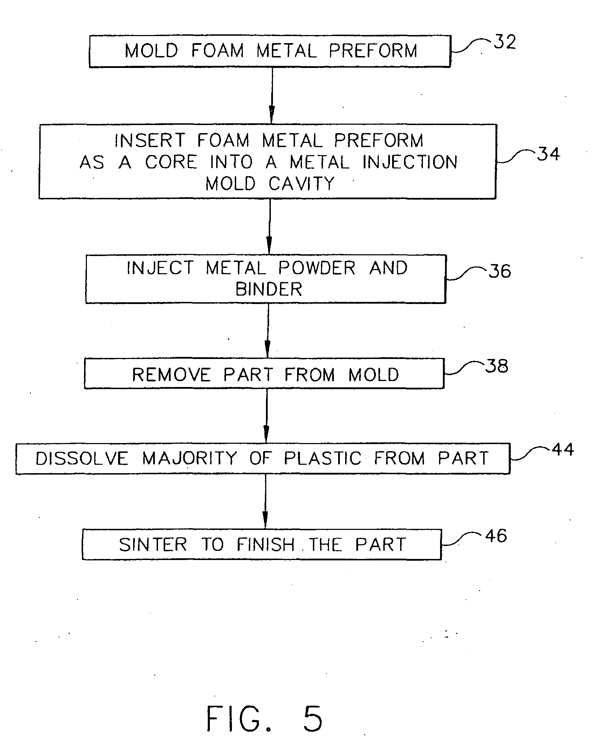

Figure 5 depicts the process for making the turbine blade 10. Initially, as shown in block 32, a core of foam material is provided. The size and shape of the core can be varied to suit a particular application. In the illustrated example, the core defines the external contours of the turbine blade 10, and thus is similar in appearance to the finished turbine blade 10. Alternatively, the core could be made smaller to form an internal reinforcement member, such as a beam section.

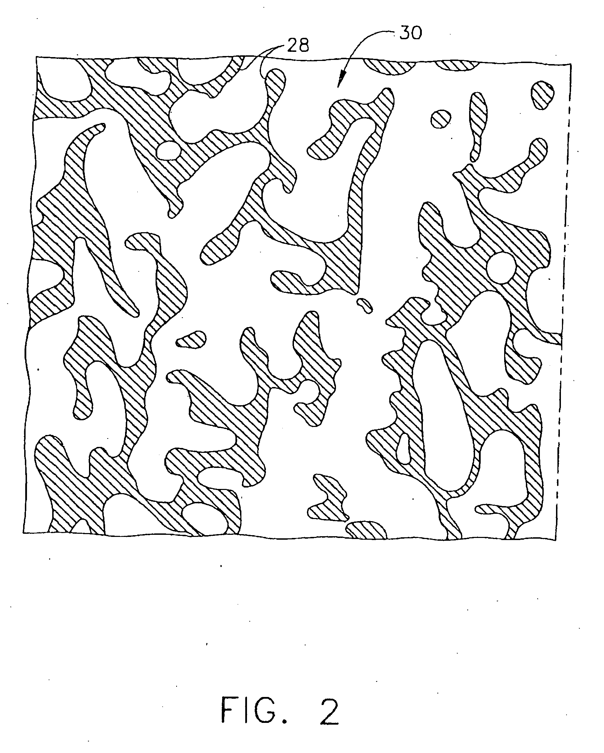

The foam material of the core, shown in Figure 2, is an open-cell solid foam made of cell walls 28 having intracellular volume 30 therebetween. The cell walls 28 are continuous through the volume of the foam. As is implicit in the term "open-cell", the intracellular volume 30 is also continuous. That is, the foam material is formed of two interpenetrating, continuous regions: the cell walls 28 and the intracellular volume 30. In one embodiment, the cell walls 28 occupy at least about 60 volume percent of the foam material, and may occupy from about 60 to about 80 volume percent of the foam material. The intracellular volume 30 occupies the remainder of the foam volume.

The cell walls 28 may be made of a ceramic material or a metallic material, or mixtures thereof. If ceramic is used for the cell walls 28, any operable ceramic may be used. An exemplary ceramic material is aluminum oxide ("alumina"). Aluminum oxide is of particular interest because of its low density. The ceramic material may be a mix of ceramics, with the ceramic that is present in the largest volume fraction being the "base ceramic".

One or more modifying ceramics may be mixed with the base ceramic to alter its properties. For example, the modifying ceramic may be a ceramic material that is more abrasive than the base ceramic. Examples of abrasive-modifying ceramics that are more abrasive than aluminum oxide and may be mixed with the aluminum oxide base ceramic are cubic boron nitride and sol gel alumina. The modifying ceramic may be a ceramic material that is less abrasive-that is, more abradable-than the base ceramic. Some examples of abradable modifying ceramics that are more abradable than aluminum oxide and may be mixed with the aluminum oxide base ceramic include silicon nitride and silicon carbide. The relative amounts of the modifying ceramics are selected according to the amount of modification desired.

The ceramic foam materials noted above and their construction are described in U.S. Patent 6,435,824 issued to Schell et al. and assigned to the assignee of the present invention.

If a metal is used for the cell walls 28, any alloy which is suitable for the intended operating conditions may be used. Examples of alloys known to be suitable for turbine engine components include aluminum, titanium, iron, cobalt, and nickel alloys. Particular examples of alloys useful for turbine components include Ti-6Al-4V, nickel-based alloys such as INCO 718, UDIMET 720, and Rene 195, and iron-based alloys such as A286.

The metallic foam materials noted above are described in U.S. Patent 6,443,700 issued to Grylls et al. and assigned to the assignee of the present invention.

Continuing at block 34 of Figure 5, the core is placed inside a mold (not shown) which has a cavity defining a negative form of the external contours of the turbine blade 10. If necessary the core may be located inside the mold with appropriate fixturing.

A metallic powder and a suitable binder are provided for injection into the mold. The metallic powder may be a single alloy or it may be a mechanical mixture of more than one alloy. As used herein the term "powder" refers to any generally free-flowing dry form of a metallic alloy, and is not limited to any particular shape or size of grains. Non-limiting Examples of known alloys suitable for constructing turbine blades include titanium alloys such as Ti-6Al-4V, nickel-based alloys such as INCO 718 or UDIMET 720, Rene 195, and iron-based alloys such as A286.

The binder may be any material which is chemically compatible with the metallic powder and which allows the required processing (e.g. mixing, injection, solidification, and leaching). Examples of known suitable binders include waxes and polymer resins. The binder may be provided in a powder form.

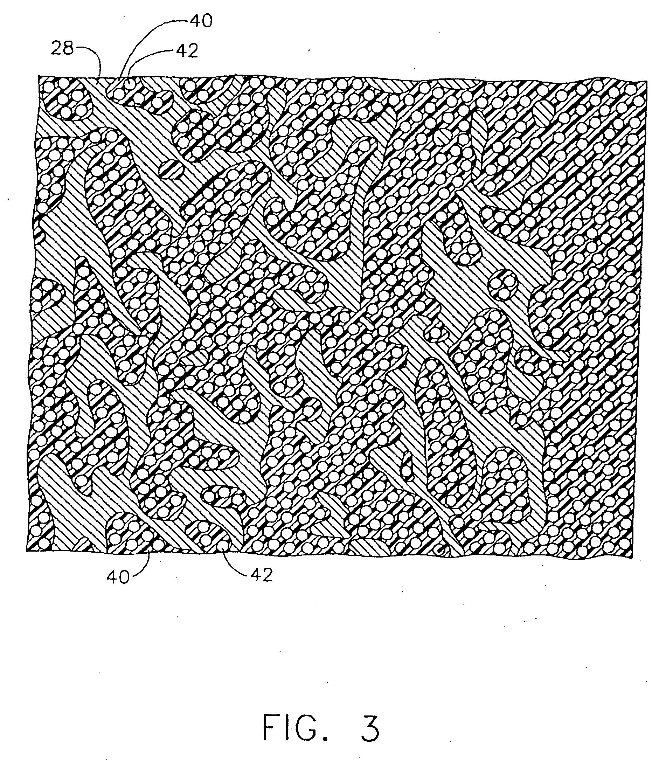

The binder and the metallic powder are thoroughly mechanically mixed together. The mixture is then heated to melt the binder and create a fluid with the metallic powder coated by the binder. Next, the mixture is formed into the shape of the turbine blade 10 at block 36, by using a known injection-molding apparatus to extrude the mixture into the cavity of the mold. The mold may optionally be heated to avoid excessively rapid solidification of the binder which would result in a brittle preform. During the injection process, the binder and metal powder flow around and through the core and fill the intracellular volume 30 of the core. The mixture is at a relatively low temperature, for example about 150° C (300° F). Accordingly, thermal stresses on the core are minimized. Once the mixture has solidified, the mold is opened and the resulting uncompacted or "green" preform with the core inside is removed (block 38). Figure 3 illustrates the physical structure of the "green" preform with the binder 40 and the metal powder 42 disposed in the intracellular volume 30.

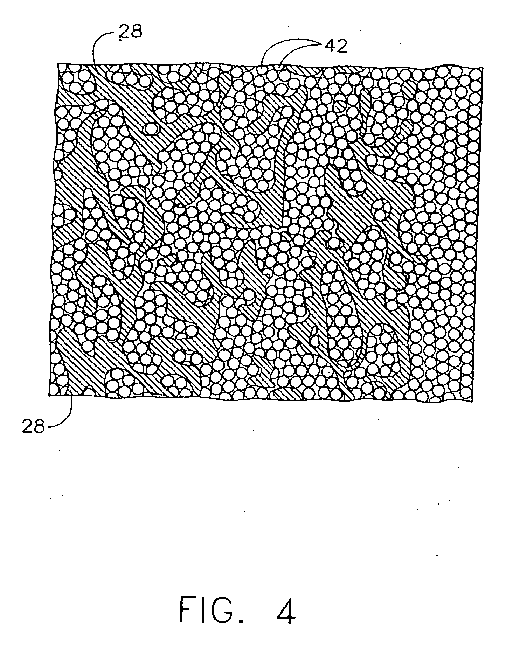

The "green" preform comprises metal powder particles 42 suspended in the solidified binder 40 in the intracellular volume 30. The preform is not suitable for use as a finished component, but merely has sufficient mechanical strength to undergo further processing. At block 44 of Figure 5, the preform is leached to remove the majority of the binder 40, creating a so-called "brown" preform (see Figure 4). This may be done by submerging or washing the preform with a suitable solvent which dissolves the binder but does not attack the metallic powder 42.

Next, at block 46, the "brown" preform is sintered. The preform is placed in a chamber which includes means for creating a suitable atmosphere to prevent undesired oxidation of the preform or other reactions during the sintering process. In the illustrated example a supply of inert gas such as argon is connected to the interior of the chamber. The sintering could also be performed under a vacuum.

The preform is heated to a temperature below the liquidus temperature of the metallic powder 42 and high enough to cause the metallic powder particles 42 to fuse together and consolidate, for example about 700° C (1300° F). The high temperature also melts and drives out any remaining binder. The preform is held at the desired temperature for a selected time period long enough to result in a consolidated turbine blade 10. The heating rate is selected depending on variables such as the mass of the preform and the desired cycle time of the sintering process. The metallic powder 42 will provide a support for the foam material during the initial sintering cycle, preventing the immediate thermal fatigue failure that normally occurs, and allowing the foam material to then become an integral part of the structure. The presence of the foam can then supply either stiffness or other mechanical property improvements to the turbine blade 10.

When the sintering cycle is complete, the turbine blade 10 is removed from the chamber and allowed to cool. When required, the turbine blade 10 may be subjected to further consolidation using a known hot isostatic pressing ("HIP") process to result in a substantially 100% dense component. If desired, the turbine blade 10 may be subjected to additional processes such as final machining, coating, inspection, etc. in a known manner.

## Claims

1. A method of producing a metallic composite component, the method comprising:
providing a core defining at least a portion of the exterior contours of the component and comprising a foam material having ceramic or metallic cell walls with intracellular volume (30) therebetween;
disposing the core in a mold having a cavity defining the exterior contours of the component;
providing a mixture of a metallic powder (42) and a binder (40);
melting the binder (40) and injecting the mixture into the mold so as to penetrate the intracellular volume (30) ;
removing a portion of the binder (40) from the preform;
heating the preform to remove the remainder of the binder (40) and to sinter the metal powder (42) together to form the finished component; and
performing a hot isostatic pressing treatment on the component after the heating step.

2. The method of claim 1 wherein the core is smaller than the component and defines an internal reinforcement member.

3. The method of claim 1 wherein the cell walls are ceramic.

4. The method of claim 3 wherein the cell walls consist essentially of alumina.

5. The method of claim 1 wherein the component is an airfoil (12) for a gas turbine engine.

## Patentansprüche

1. Verfahren zum Herstellen einer metallischen Verbundstoffkomponente, wobei das Verfahren die Schritte aufweist:
Bereitstellen eines Kerns, der wenigstens einen Teil der äußeren Konturen der Komponente definiert und ein Schaummaterial mit keramischen oder metallischen Zellwänden mit intrazellulärem Volumen (30) dazwischen aufweist;
Anordnen des Kerns in einer Form mit einem die Außenkonturen der Komponente definierenden Hohlraum;
Bereitstellen eines Gemisches aus einem metallischen Pulver (42) und einem Binder (40);
Schmelzen des Binders (40) und Einspritzen des Gemisches in die Form dergestalt, dass es das intrazelluläre Volumen (30) durchdringt;
Entfernen eines Teils des Binders (40) aus der Vorform;
Erwärmen der Vorform, um den Rest des Binders (40) zu entfernen und das Metallpulver (42) zur Erzeugung der fertigen Komponente zusammenzusintern; und
Durchführen einer heißen isostatischen Pressbehandlung an der Komponente nach dem Erwärmungsschritt.

2. Verfahren nach Anspruch 1, wobei der Kern kleiner als die Komponente ist und ein internes Verstärkungselement definiert.

3. Verfahren nach Anspruch 1, wobei die Zellwände Keramik sind.

4. Verfahren nach Anspruch 3, wobei die Zellwände im Wesentlichen aus Aluminiumoxid bestehen.

5. Verfahren nach Anspruch 1, wobei die Komponente ein Schaufelblatt (12) für ein Gasturbinentriebwerk ist.

## Revendications

1. Procédé de fabrication d'une pièce métallique en matériau composite, le procédé comportant :
la réalisation d'une âme définissant au moins une partie du profil extérieur de la pièce et comprenant une matière expansée à parois d'alvéoles céramiques ou métalliques entre lesquelles se trouve un volume intra-alvéolaire (30) ;
la disposition de l'âme dans un moule ayant une empreinte définissant le profil extérieur de la pièce ;
la réalisation d'un mélange d'une poudre métallique (42) et d'un liant (40) ;
la fusion du liant (40) et l'injection du mélange dans le moule de façon qu'il pénètre dans le volume intra-alvéolaire (30) ;
l'élimination d'une partie du liant (40) contenu dans l'ébauche ;
le chauffage de l'ébauche afin d'éliminer le reste du liant et d'amalgamer la poudre métallique (42) par frittage pour former la pièce finie ; et
la réalisation d'un traitement de compression isostatique à chaud sur la pièce après l'étape de chauffage.

2. Procédé selon la revendication 1, dans lequel l'âme est plus petite que la pièce et définit un élément de renforcement interne.

3. Procédé selon la revendication 1, dans lequel les parois des alvéoles sont en céramique.

4. Procédé selon la revendication 3, dans lequel les parois des alvéoles sont essentiellement constituées d'alumine.

5. Procédé selon la revendication 1, dans lequel la pièce est une pale profilée (12) pour moteur à turbine à gaz.
